# EUROPEAN PATENT SPECIFICATION

(11) **EP 2 589 646 B1**
(45) Date of publication and mention of the grant of the patent: **25.05.2016**
(21) Application number: 12191332.1
(22) Date of filing: 05.11.2012
(51) Int. Cl.: C10K 3/00, C10B 53/02, C10J 3/64, C10K 3/02

(54) **METHOD FOR RECOVERING ENERGY FROM BIOMASS, IN PARTICULAR FROM VEGETABLE BIOMASS**
VERFAHREN ZUR RÜCKGEWINNUNG VON ENERGIE AUS BIOMASSE, INSBESONDERE AUS PFLANZLICHER BIOMASSE
PROCÉDÉ PERMETTANT DE RÉCUPÉRER DE L'ÉNERGIE À PARTIR D'UNE BIOMASSE, EN PARTICULIER À PARTIR DE BIOMASSE VÉGÉTALE

(30) Priority: 04.11.2011 IT MI20112011
(43) Date of publication of application: 08.05.2013
(73) Proprietor: Ansaldo Energia S.p.A., Genova (IT)
(72) Inventor: Colla, Lucio, 20091 Bresso (IT); Zanella, Daniele, 47100 Forli' (IT); Cavazzi, Michele, 47921 Rimini (IT); Pelizza, Maria Luisa, 15059 Volpedo (IT)
(74) Representative: Bergadano, Mirko

(56) References cited:
- EP-A1- 1 772 511
- WO-A1-01/68789
- US-A- 5 132 007
- US-A1- 2007 131 909
- US-A1- 2009 012 188
- US-A1- 2010 237 290

## Description

The present invention concerns a method for recovering energy from biomass, in particular from vegetal biomass, by gasification of the biomass.

As is known, gasification is a process in which a solid or liquid carbonaceous material, containing chemical bonds between carbon, hydrogen and oxygen, in addition to a plurality of organic and inorganic constituents, is made to react with air, oxygen and/or steam.

The reactions provide sufficient exothermic energy to generate a primary gas product containing above all CO, H2, CO2 and H2O in addition to hydrocarbons with low molecular weight mixed with volatile and condensable organic and inorganic compounds.

The majority of the inorganic constituents present in the supply are chemically modified and then discharged in the bottom ash, retained in the crude gas produced and/or conveyed in the light particulate.

The gas produced is purified by chemical and/or physical methods for transformation into a fuel gas for utilisation in appropriate energy conversion systems.

Biomass constitutes an important renewable source for use in gasification processes for the production of electrical and thermal energy.

Of the various techniques known for performing the general process of gasification, one is based on physical separation of the individual processes constituting the entire thermochemical gasification process (drying, pyrolysis, oxidation, reduction) which each take place in a specifically defined area of the reactor, in particular a fixed-bed reactor.

Separation of the phases makes accurate control of each process phase possible, improving many of the negative aspects characteristic of other types of gasifiers, with the result that very low tar concentrations are obtained in the gas produced.

According to this technology, drying of the biomass and the pyrolysis take place in the first part of the system; the humidity produced in the drying is used in a closed circuit partly as a gasifying agent and partly, super-heated, returns to the drying process where it aids rapid drying of the biomass.

The pyrolysis section requires particularly accurate modelling of the residence times and work temperatures as said elements substantially influence the choice of design alternatives for the subsequent process sections. In this process the pyrolysis is completed in two separate stages.

In relation to the configurations adopted and the interconnection system between the two reactors, it is possible to obtain different conditions in terms of residence time and temperature of the pyrolysis process which therefore result in different quantities of char and pyrolysis gas.

The operating conditions also affect the composition of the pyrolysis gas, substantially in terms of composition and tar content.

The truly innovative aspect of the staged process lies in the fact that it is the pyrolysis gas that is partially oxidised to generate the overall thermal energy necessary for sustaining the thermochemical transformation reactions of the solid fuel into gas.

The partial oxidation, that allows conversion of the tar by thermal cracking, is performed in the free area that faces the char bed or in a dedicated external chamber; the hot gases produced in partial oxidation pass to the reduction reactor.

This heat sustains the endothermic reduction reactions that develop between the char produced during pyrolysis and the gases produced with the partial oxidation.

Optimisation of control of the operating parameters in each of the reactors constituting the process (drying, pyrolysis, partial oxidation, reduction) allows significant reduction in the tar content of the gas produced.

The presence of tar in the gas produced at concentrations higher than the expected levels can derive from non-completion of the reactions in the high temperature areas of the partial oxidation reactor due to non-uniform mixing, and insufficient residence times in the reduction reactor.

WO 01/68789 and US 2010/237290 disclose methods for recovering energy from biomass in which the various steps of the gasification process (drying; pyrolysis; oxidation; reduction; etc.) are carried out in respective physically separated reaction stages or units.

The known processes, and relative apparatus, appear to offer margins for improvement, above all in terms of yield of syngas produced and more generally in terms of efficiency and simplicity.

One object of the present invention is to provide a method for recovering energy from biomass, in particular from vegetal biomass, which is free from the drawbacks highlighted here in the known art.

The present invention concerns a method for recovering energy from biomass, in particular from vegetal biomass, as defined in essential terms in the attached claim 1 and, as regards the preferred additional characteristics, in the dependent claims.

Essentially, the invention method is carried out in an apparatus consisting of a biomass gasification system with high flexibility and high efficiency for the generation of thermal electrical energy or for trigeneration.

The gasification system is based on a high yield of syngas generated by a fixed-bed process designed so as to almost completely convert into non-condensable gaseous species the liquid, solid and gaseous products obtained in the heating phase of the biomass, in the absence of air (pyrolysis). This results in a high conversion yield which allows high energy recovery from the biomass, also in the presence of high biomass humidity (up to 40%).

The high quality gaseous carrier (syngas), produced in the apparatus, is further treated in order to permit the reliable and efficient operation of internal combustion engines and micro-turbines.

Small apparatus also fed with woody-cellulosic residues of agricultural and forestry origin for installation in rural environments can also be produced.

The apparatus is of the self-regulating type and operates in automated mode, without the need for operators or supervisors during normal operation.

The apparatus is characterised by a high level of dependability for prolonged operation without continuous use of labour.

An innovative characteristic of the process adopted is that it does not require water when wet biomass is used (clean wood, woody residues from cultivation of crops, wet woody-cellulosic waste). In fact the water required for the process is recovered from the ingoing biomass, in the drying stage, and is used partly in the partial oxidation and reduction stages and partly, condensed and re-vaporised in a closed circuit and at the expense of the heat recovered from the apparatus, returns to the drying unit. Any excess water is discharged from the apparatus and sent for treatment or disposal.
The apparatus is able to recover over 70% of the energy available in the biomass.
The weight of the solid residues after the operations for recovery from the biomass is approximately one hundred times smaller than the weight of the biomass fed to the apparatus. These objectives have been achieved due to the development of an appropriate and innovative control of the individual phases of drying, pyrolysis, partial oxidation, gasification and cleaning of the gas produced and their mutual interaction, which constitute the typical gasification process chain.
In particular, control of the flow rate and composition of the reagents (biomass, gasified agents and any catalysts) prevents, in the thermochemical equilibrium reactions, excess or lack of the reagents resulting in uncontrollable deviations of the currents produced.
The improvements vis-α-vis the known techniques for small-size pyrogasification processes can be summarised as follows.
- Constant control of mass flow rate and humidity of the biomass fed to optimise recovery of the thermal power required by the system; conditioning of the biomass, consisting mainly in drying, is in fact the first stage of the new process. The drying is performed as a treatment external to the apparatus but is integrated with the subsequent stages. The humidity of the biomass is a variable parameter which depends on the preparation and storage conditions; the continuous humidity measurement, together with the weight fed in, provides, via an algorithm, the quantity of steam expected during drying. A maximum biomass humidity value of 40% is accepted. Constant control of the flow rate and humidity of the biomass provide the flow rate of the steam produced in drying. Due to control of the pyrolysis products flow rates, the flow rate of steam to the reduction reactor can be regulated. The pyrolysis stage can be continuously adjusted (residence time and temperature) thus providing an appropriately dosed production of char and steam in order to achieve the desired steam to carbon ratio.
- Regulation of the pyrolysis process via the possibility of separately controlling two sub-stages through which the treated material is passed. High heating speeds of the biomass in the modular reactors are achieved, rapidly reaching the pyrolysis conditions that lead to high production of gas and condensable products with respect to the residual char. The biomass undergoing treatment is progressively modified and therefore the weight ratios between solid and pyrolysis gas change. Regulation of the two sub-stages, which are thermally separate, is substantially based on the residence time, maintaining the process temperature constant by regulation of the temperature control fluids flowing in the reactor outer air space.
- Recovery of the water evaporated in the process which is then fed, in the form of super-heated steam, directly to the drying and gasification section in the quantity necessary for the two processes.
- Transfer of thermal energy to the biomass by indirect heating with diathermic oil and direct heating with superheated steam in the absence of air;
- Condensation of the water to avoid uncontrolled discharges into the atmosphere;
- Recovery of the thermal energy necessary for pyrolysis of the biomass with indirect exchange in the outer air space, where the exhausted combustion gases circulate, of a small portion of the syngas produced.
- Pyrolysis conditions adjustable according to the quality of the biomass fed to the apparatus also by interaction of the simulation model and predictive control model.
- Tar reduction which can be performed in three steps:
   - mixing of the char exiting from the pyrolysis phase with mineral catalysts for reduction of the chlorine and sulphur content in the gasification stage;
   - degradation of the residual tar present in the gaseous products in the controlled transit through the char bed at high temperature;
   - passage through catalytic reactor for reforming the residual tar.

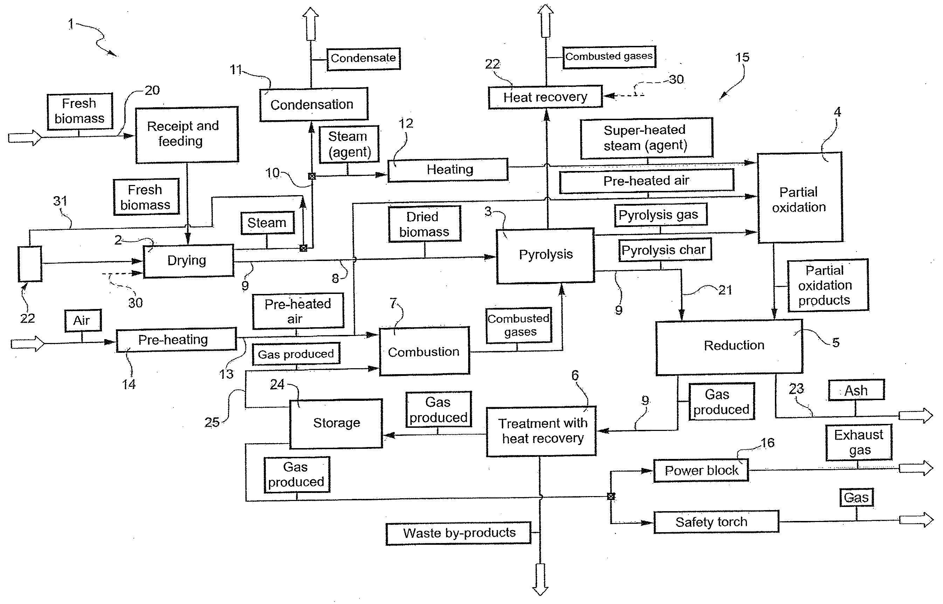

The invention is further described in the following non-limiting embodiment example, with reference to the accompanying figure which schematically represents an apparatus for carrying out the method of the invention.

With reference to the attached figure, an apparatus 1 for recovering energy from biomass, in particular from vegetal biomass, by gasification comprises mainly: a biomass drying unit 2; a pyrolysis unit 3 comprising one or more pyrolysis reactors in series; a partial oxidation unit 4; a reduction unit 5; a gas treatment and heat recovery unit 6; a combustion unit 7; a main circuit 8 which connects in series the drying unit 2, the pyrolysis unit 3, the partial oxidation unit 4 and the reduction unit 5.

The drying unit 2, the pyrolysis unit 3, the partial oxidation unit 4, the reduction unit 5, the gas treatment unit 6 and the combustion unit 7 are physically separate units, defining respective distinct and separate reaction environments, connected to one another by pipes 9 and in particular by the main circuit 8.

The pyrolysis unit 3, the partial oxidation unit 4 and the reduction unit 5 define respective physically separate reaction stages of the gasification process, i.e. of the overall process which transforms the biomass into fuel gas (syngas), namely: pyrolysis phase, partial oxidation phase, reduction phase.

The drying unit 2, the gas treatment unit 6 and the combustion unit 7 define further reaction stages complementary to the gasification process, i.e.: drying phase, treatment phase of the fuel gas produced, combustion phase.
The overall process of transformation of the solid biomass into fuel gas, performed in the apparatus 1, therefore occurs via a succession of physically separate reaction stages, appropriately linked and integrated.

The partial oxidation unit 4 and the reduction unit 5 can also be integrated in one single reactor, with a partial oxidation area and a reduction area remaining separate inside said reactor; the respective supplies of gas to the partial oxidation area and of solid (char) to the reduction area also remain separate, being made by means of respective distinct pipes 9 of the main circuit 8.

The separate reaction stages have the aim of obtaining a clean gas product, with reduced tar content and with minimum percentage of nitrogen and humidity possible. These results are achieved via thermal cracking of the tar produced in pyrolysis in the partial oxidation phase and by simultaneously feeding the required quantity of water to the gasification phase.

The chain of thermochemical reactions provides the quantity of thermal energy necessary to support the endothermic phases of the pyrolysis and gasification.

Advantageously, the apparatus 1 furthermore comprises: a steam circuit 10, provided with a condenser 11 and a steam heating unit 12; an air circuit 13, provided with an air pre-heating unit 14 and connected to the combustion unit 7 and to the partial oxidation unit 4. The steam heating unit 12 and the air pre-heating unit 14 use the heat recovered from the combustion unit 7.

The apparatus 1 is furthermore provided with a control system 15, which controls operation of the individual units and therefore the different reaction stages.

The apparatus 1 is connected to an electricity generating station 16, able to use the fuel gas produced and generate electrical and thermal energy or perform trigeneration. The generation station 16 can have an endothermic type engine (in particular, for powers below 500 kWe) or a gas turbine with recovery of heat from the exhaust gases by means of integration with organic Rankine cycle (for powers above 500 kWe).

The fresh biomass to be treated is fed to the apparatus 1 via a biomass feed line 20 which enters the drying unit 2, in which the biomass is dried and steam is recovered; the steam recovered in the drying unit 2 circulates in the circuit 10 and is partly condensed in the condenser 11 and partly superheated in the steam heating unit 12, and then feeds the partial oxidation unit 4.

The drying phase performed in the drying unit 2 prepares the biomass for the subsequent treatments and in particular for the pyrolysis phase, raising the temperature and ensuring uniform biomass humidity, thus helping to control the quantity of water in the pyrolysis unit 3.

The drying phase is performed at ambient pressure with superheated steam and is controlled by the control system 15 by means of:
- the residence time of the biomass in the drying unit 2;
- the flow rate of the steam in recirculation;
- the excess steam bleed flow rate from the drying unit 2;
- the flow rate of demineralised water and/or water recovered in condensation of the process fluids to be fed to the drying unit 2 for the generation of steam when the incoming biomass has a humidity below the minimum humidity for generating the necessary process steam.

The biomass dried in the drying unit 2 is fed, via the circuit 8, to the pyrolysis unit 3 to which combusted gases produced in the combustion unit 7 are also conveyed and where the pyrolysis reaction takes place; the pyrolysis reaction produces: pyrolysis gases which are conveyed along the circuit 8 to the partial oxidation unit 4; pyrolysis char which is conveyed via a reduction line 21 to the reduction unit 5, where it forms a reduction bed; combusted gases which are evacuated from the apparatus 1, if necessary after passing through a thermal recovery unit 22.

The pyrolysis unit 3 operates in predefined conditions of flow rate, humidity and chemical composition of the biomass dried at the inlet. The process temperature and the residence time are defined on the basis of said variables.

The pyrolysis phase is performed at high temperature and medium residence times in the total absence of air and with humidity equal to the residual humidity in the biomass after drying.

Preferably, the pyrolysis unit 3 comprises two pyrolysis reactors in series to increase the control possibilities.

The adjustments of the pyrolysis unit 3 combine with those of the combustion unit 7 from which exhausted gas is taken in order to control the reaction temperature of the pyrolysis unit 3.

The optimisation of the pyrolysis phase is based not only on the physical operating data but also on analysis of the pyrolysis products.

The partial oxidation unit 4 is fed not only with the pyrolysis gases coming from the pyrolysis unit 3, but also with super-heated steam, via the circuit 10, and with pre-heated air, via the circuit 13.

The steam circulating in the circuit 10 is used in the partial oxidation unit 4 not only as a gasifying agent but also as an element for moderating the increase in temperature, as it reacts rapidly with the ashes/soot that form in the tar thermal cracking reactions. The pre-heated air circulating in the circuit 13 intervenes in the partial oxidation of the pyrolysis gases, raising the temperature of the partial oxidation products to the temperature of the subsequent reduction unit 5.

The char that forms in the pyrolysis phase passes directly into the reduction unit 5 where it forms a reduction bed which is heated to high temperature by irradiation of the oxidation area and by the passage of the gases produced.

The reduction unit 5, comprising the reduction bed consisting of particles of red-hot char, is fed with partial oxidation products from the partial oxidation unit 4 along the main circuit 8 and, via the reduction line 21, with the pyrolysis char produced in the pyrolysis unit 3.

In the reduction bed the endothermic reactions develop between the carbon and the water and between the carbon and the carbon dioxide, and the temperature is gradually lowered. The temperature must remain at sufficiently high levels to guarantee performance of the gasification reactions and to maximise the transformations into H2 and CO. The high temperature and the presence of char also have the effect of favouring further degradation of the tar present in the gas.

The reduction reactions that occur in the reduction unit 5 produce ash, which is removed via an ash discharge line 23, and reduction gas, which is conveyed along the circuit 8 to the treatment unit 6.

The main reactions, leading to formation of the fuel gas, develop in the partial oxidation unit 4 and in the reduction unit 5, comprising respective reactors in series along the main circuit 8.

Both the units 4, 5 are configured so as to operate in controlled conditions via continuous pressure and temperature monitoring using detection and measurement instruments arranged in the same.

In particular, the scheduled quality level of the gas produced at the outlet of unit 5 is achieved by control of the reaction via the following parameters:
- temperature in the partial oxidation unit 4 to verify that the values found are compatible with those calculated via the numerical simulations;
- temperature profile and pressure losses along the char bed of the reduction unit 5, to avoid uncontrolled temperature increases to near the ash melting point.

The fundamental parameter for control of the temperature in the oxidation unit 4 is the equivalence ratio which also affects the composition of the gas produced, also in terms of a higher or lower nitrogen content.

The equivalence ratio during operation is set as a design value and regulated on the mass throughput of the pyrolysis gas, adapting the mass throughput of air (oxidising agent). The flow rate of oxidising agent (pre-heated air) determines the value of the equivalence ratio referred to the pyrolysis gas. According to the nature of the material to be treated at the inlet to the apparatus 1, it is possible to enrich the current of oxidising air with 02.

The current of gas from the pyrolysis unit 3, the current of super-heated air (oxidising agent) and the current of superheated steam from the drying unit 2 converge in the partial oxidation unit 4.

The equivalence ratio is further regulated to maintain the temperature in the partial oxidation reactor at the set-point value.

The pressure losses through the reduction bed consisting of the particles of red-hot char in the reduction unit 5 are indicative of a reduction in the transit permeability of the gases coming from the partial oxidation caused by an accumulation of the dusty ash in the interstices between the particles.

The exhaustion of the char and the progressive formation of the ash towards the lower parts of the bed allows natural discharge of the ash via a bottom movable grid. In the event of an increase in the pressure losses, the grid is activated which accelerates discharge of the ash, delicately moves the char bed and restores the standard conditions.

The gas treated by the treatment unit 6, in which said gas is appropriately purified, constitutes the fuel gas produced by the apparatus 1; the fuel gas is optionally accumulated in a tank 24 and is partly burnt in the combustion unit 7, to which it is fed via a combustion line 25, and partly sent for use, in particular to the generation station 16.

The combustion unit 7 is also supplied with air, preferably pre-heated in the air pre-heating unit 13, via a branch of the circuit 13.

The heat required for the process is recovered from the high temperature currents circulating in the apparatus 1, in particular from the gas coming out of the reduction unit 5 and from the exhaust gas coming out of the combustion unit 7, and transferred as required.

The apparatus 1 is provided with a circuit 30, only partially shown in the figure, in which diathermic oil circulates which heats the drying unit 2.

Advantageously, part of the steam produced in the drying unit 2 is recirculated to the drying unit 2 by means of a recirculation circuit 31 provided with a heat recovery unit 22, which heats the steam before it is re-introduced into the drying unit 2.

The circuit 30 is connected to the control system 15, which operates so as to make regulation of the thermal flows in the drying unit 2 independent of regulation of the treatment unit 6 where the heat reduction of the gas produced takes place. In other words, the priority in the process is assigned to reduction of the temperature of the gas produced; this is followed if necessary by the recovery of thermal energy from the exhaust gas coming out of the combustion unit 7 and lastly transfer of the thermal energy necessary for the drying unit 2.

The control system 15 is configured so as to detect and process the following main parameters:
- humidity and mass flow rate of the biomass entering into the apparatus 1 and flow rate of the steam generated in the drying unit 2, from which the control system 15 obtains the mass flow rate of dried biomass sent to the pyrolysis phase;
- temperature and residence time in the pyrolysis unit 3 and flow rate of the pyrolysis gases, from which the control system 15 calculates the mass flow rate of the pyrolysis solid residue and then, once the ash percentage content is known, the quantity of char which passes to the reduction unit 5 and the quantity of steam necessary in the reduction phase;
- temperature in the partial oxidation unit 4, which allows regulation of the flow rate of air, i.e. of oxidising agent fed to the oxidation phase, or determination of the equivalence ratio;
- temperature profile and Δp trend in the thickness of the char bed inside the reduction unit 5, and flow rate of the gas produced in the reduction unit 5: these data are used to determine the equivalence ratio, the flow rate of the steam and the quantity of residual pyrolysis char.

The control system 15 can also acquire:
- the composition of the pyrolysis gas with particular regard to the quantity and composition of the tar;
- the composition of the gas produced which is drawn off downstream of the gasometer.

These data, acquired in steady state conditions, are compatibilized with the set-point values and contribute to fine-tuning regulation of the apparatus based on a predictive model developed via computational simulation of the process.

The general criteria for management of the apparatus 1 are:
- the flow rate of the biomass to be sent for treatment is established in the start-up phase in relation to the capacity chosen for operation of the apparatus 1;
- the residence time is fixed in the start-up phase, according to the capacity chosen for operation of the apparatus 1 and the estimated humidity content;
- the flow rate of the super-heated steam for drying is determined in relation to the humidity and mass flow rate of the biomass;
- the equivalence ratio.

Lastly, it is understood that further modifications and variations can be made to the apparatus and method described and illustrated here without departing from the scope of the attached claims.

## Claims

1. A method for recovering energy from biomass, in particular from vegetal biomass, by gasification, comprising:
a drying step of the biomass; a pyrolysis step; a partial oxidation step; a reduction step; a gas treatment step; a combustion step; said steps being carried out in respective physically separated reaction stages; the method comprising the steps of:
- recovering the heat required for the process from the gas coming out of the reduction step and from the exhaust gas coming out of the combustion step;
- regulating thermal flows in the drying step independently of regulation of the heat reduction of the gas produced in the reduction step;
- controlling the drying step, the pyrolysis step, the partial oxidation step and the reduction step so as to prioritize, in the following order: temperature reduction of the gas produced in the reduction step; recovery of thermal energy from the exhaust gases exiting from the combustion step; transfer of thermal energy to the drying step; and
- detecting and processing: humidity and mass flow rate of the biomass to treat and flow rate of steam produced in the drying step, for calculating the mass flow rate of dried biomass sent to the pyrolysis step; temperature and residence time in the pyrolysis step and flow rate of the pyrolysis gases, for calculating the mass flow rate of the pyrolysis solid residue and then, once the ash percentage content is known, the quantity of char which passes to the reduction step and the quantity of steam needed in the reduction step; temperature of the partial oxidation step, for regulating the flow rate of air supplied to the partial oxidation step, i.e. of oxidising agent fed to the oxidation step, or determining the equivalence ratio; temperature profile and Δp trend in the thickness of a reduction char bed used in the reduction step, and flow rate of the gas produced in the reduction step, for determining the equivalence ratio, the flow rate of the steam and the quantity of residual pyrolysis char.

2. A method according to claim 1, wherein the pyrolysis step is carried out in at least two reaction stages in series.

3. A method according to claim 1 or 2, wherein in the partial oxidation step, pyrolysis gas produced in the pyrolysis step and pre-heated air react, superheated steam being also present.

4. A method according to one of the preceding claims, wherein the partial oxidation step and the reduction step are controlled as a function of: temperature of the partial oxidation step; temperature profiles and pressure losses along the reduction bed in the reduction step; equivalence ratio.

5. A method according to one of the preceding claims, comprising the steps of recovering steam from the drying step, and superheating at least part of the recovered steam for sending steam to the partial oxidation step.

6. A method according to one of the preceding claims, wherein the fuel gas produced in the reduction step is partly burned to provide heat to the pyrolysis step, and partly sent to a power generation station (16).

7. A method according to one of the preceding claims, comprising a step of recovering heat from the gas produced in the reduction unit and from the exhaust gas exiting from the combustion step, and transferring said heat to the biomass in the drying step.

8. A method according to one of the preceding claims, wherein the tars produced in the pyrolysis step are subject to thermal cracking in the partial oxidation step, simultaneously supplying to the partial oxidation step an amount of steam.

9. A method according to one of the preceding claims, wherein the residual tars after the reduction step are subject to catalytic reforming in the presence of steam.

## Patentansprüche

1. Verfahren zur Energiegewinnung aus Biomasse, insbesondere aus pflanzlicher Biomasse, durch Vergasung, welches aufweist: einen Trocknungsschritt der Biomasse, einen Pyrolyseschritt, einen Schritt teilweiser Oxidation, einen Reduktionsschritt, einen Gasbehandlungsschritt, einen Verbrennungsschritt, wobei die Schritte in jeweiligen physisch getrennten Reaktionsstufen ausgeführt werden, wobei das Verfahren die Schritte aufweist:
- Gewinnen der für den Prozess benötigten Wärme aus dem Gas, welches aus dem Reduktionsschritt kommt und aus dem Abgas, welches aus dem Verbrennungsschritt kommt;
- Regeln der thermischen Strömungen im Trockenschritt unabhängig von der Regelung der Wärmereduktion des im Reduktionsschritts erzeugten Gases;
- Steuern des Trocknungsschrittes, des Pyrolyseschrittes, des Schrittes der teilweisen Oxidation und des Reduktionsschrittes, um in der folgenden Reihenfolge zu priorisieren: Temperaturverringerung des im Reduktionsschritt erzeugten Gases; Gewinnung der thermischen Energie aus den aus dem Verbrennungsschritt kommenden Abgasen; Übertragung der thermischen Energie in den Trocknungsschritt; und
- Erfassen und Verarbeiten von: Feuchtigkeit und Massenflussrate der zu behandelnden Biomasse und Flussrate des im Trocknungsschritt erzeugten Dampfes, zur Berechnung der Massenflussrate der getrockneten Biomasse, die in den Pyrolyseschritt gesandt wird; Temperatur und Verweildauer im Pyrolyseschritt und Flussrate der Pyrolysegase, zur Berechnung der Massenflussrate des festen Pyrolyse-Restes und dann, wenn der Aschen-Prozentgehalt bekannt ist, der Menge an Holzkohle, die in den Reduktionsschritt gelangt, und der Menge des Dampfes, der im Reduktionsschritt benötigt wird; Temperatur des Schrittes teilweiser Oxidation, zur Regelung der Flussrate der in den Schritt teilweiser Oxidation gelieferten Luft, d.h. eines dem Oxidationsschritt zugeführten Oxidationsmittels, oder zum Bestimmen des Äquivalenzverhältnisses; Temperaturprofil und Δp-Trend in der Dicke eines Reduktions-Holzkohlebettes, welches im Reduktionsschritt genutzt wird, und Flussrate des im Reduktionsschritt erzeugten Gases, zur Bestimmung des Äquivalenzverhältnisses, der Flussrate des Dampfes und der Menge der restlichen Pyrolyse-Holzkohle.

2. Verfahren nach Anspruch 1, wobei der Pyrolyseschritt in mindestens zwei Reaktionsstufen in Reihe ausgeführt wird.

3. Verfahren nach Anspruch 1 oder 2, wobei im Schritt teilweiser Oxidation das im Pyrolyseschritt erzeugte Pyrolysegas und vorgewärmte Luft reagieren, wobei auch überhitzter Dampf vorhanden ist.

4. Verfahren nach einem der vorangehenden Ansprüche, wobei der Schritt teilweiser Oxidation und der Reduktionsschritt als Funktion von Folgendem gesteuert werden: Temperatur des Schrittes teilweiser Oxidation; Temperaturprofil und Druckverluste über das Reduktionsbett im Reduktionsschritt; Äquivalenzverhältnis.

5. Verfahren nach einem der vorangehenden Ansprüche, aufweisend die Schritte des Gewinnens von Dampf aus dem Trocknungsschritt und Überhitzen mindestens eines Teils des gewonnenen Dampfes zur Zuführung des Dampfes in den Schritt teilweiser Oxidation.

6. Verfahren nach einem der vorangehenden Ansprüche, wobei das im Reduktionsschritt erzeugte Brenngas teilweise verbrannt wird, um Wärme für den Pyrolyseschritt bereitzustellen, und teilweise in ein Kraftwerk (16) gesandt wird.

7. Verfahren nach einem der vorangehenden Ansprüche, aufweisend einen Schritt des Gewinnens von Wärme aus dem in der Reduktionseinheit erzeugten Gas und aus dem aus dem Verbrennungsschritt kommenden Abgas, und Übertragen der Wärme an die Biomasse im Trocknungsschritt.

8. Verfahren nach einem der vorangehenden Ansprüche, wobei die im Pyrolyseschritt erzeugten Teerprodukte einer thermischen Aufspaltung im Schritt teilweiser Oxidation unterzogen werden, wobei gleichzeitig eine Menge an Dampf dem Schritt der teilweisen Oxidation zugeführt wird.

9. Verfahren nach einem der vorangehenden Ansprüche, wobei die Rest-Teerprodukte nach dem Reduktionsschritt einer katalytischen Reformierung in Gegenwart von Dampf unterzogen werden.

## Revendications

1. Procédé de récupération d'énergie à partir d'une biomasse, en particulier à partir d'une biomasse végétale, par gazéification, qui comprend :
une étape de séchage de la biomasse ; une étape de pyrolyse ; une étape d'oxydation partielle ; une étape de réduction ; une étape de traitement gazeux ; une étape de combustion ; lesdites étapes étant exécutées à des étages de réaction respectifs physiquement séparés ; le procédé comprenant les étapes qui consistent à :
- récupérer la chaleur nécessaire au processus à partir du gaz qui provient de l'étape de réduction et du gaz d'échappement qui provient de l'étape de combustion ;
- réguler les flux thermiques à l'étape de séchage, indépendamment de la régulation de la réduction de chaleur du gaz produit à l'étape de réduction ;
- contrôler l'étape de séchage, l'étape de pyrolyse, l'étape d'oxydation partielle et l'étape de réduction de façon à hiérarchiser, dans l'ordre suivant : la réduction de température du gaz produit à l'étape de réduction ; la récupération de l'énergie thermique à partir des gaz d'échappement qui proviennent de l'étape de combustion ; le transfert de l'énergie thermique vers l'étape de séchage ; et
- détecter et traiter : l'humidité et le débit massique de la biomasse à traiter, et le débit de la vapeur produite à l'étape de séchage, afin de calculer le débit massique de la biomasse séchée envoyée vers l'étape de pyrolyse ; la température et le temps de séjour à l'étape de pyrolyse, et le débit des gaz de pyrolyse, afin de calculer le débit massique du résidu solide de pyrolyse, puis, une fois que la teneur en cendres sous forme de pourcentage est connue, la quantité de résidus carbonés transférés vers l'étape de réduction et la quantité de vapeur nécessaire à l'étape de réduction ; la température de l'étape d'oxydation partielle, afin de réguler le débit de l'air fourni à l'étape d'oxydation partielle, c'est-à-dire de l'agent d'oxydation fourni à l'étape d'oxydation, ou de déterminer le rapport d'équivalence ; le profil de température et la tendance Δp dans l'épaisseur d'un lit de résidus carbonés de réduction à l'étape de réduction, et le débit du gaz produit à l'étape de réduction, afin de déterminer le rapport d'équivalence, le débit de la vapeur et la quantité de résidus carbonés de pyrolyse résiduels.

2. Procédé selon la revendication 1, dans lequel l'étape de pyrolyse est exécutée dans au moins deux étages de réaction en série.

3. Procédé selon la revendication 1 ou 2, dans lequel, à l'étape d'oxydation partielle, le gaz de pyrolyse produit à l'étape de pyrolyse et l'air préchauffé réagissent, de la vapeur surchauffée étant également présente.

4. Procédé selon l'une des revendications précédentes, dans lequel l'étape d'oxydation partielle et l'étape de réduction sont contrôlées en fonction :
de la température de l'étape d'oxydation partielle ; des profils de température et des pertes de pression le long du lit de réduction à l'étape de réduction ; du rapport d'équivalence.

5. Procédé selon l'une des revendications précédentes, qui comprend les étapes qui consistent à récupérer la vapeur de l'étape de séchage, et à surchauffer au moins une partie de la vapeur récupérée afin d'envoyer la vapeur vers l'étape d'oxydation partielle.

6. Procédé selon l'une des revendications précédentes, dans lequel le gaz combustible produit à l'étape de réduction est partiellement brûlé afin de fournir de la chaleur à l'étape de pyrolyse, et partiellement envoyé vers une station de génération d'énergie (16).

7. Procédé selon l'une des revendications précédentes, qui comprend une étape qui consiste à récupérer la chaleur du gaz produit dans l'unité de réduction et du gaz d'échappement qui provient de l'étape de combustion, et à transférer ladite chaleur vers la biomasse à l'étape de séchage.

8. Procédé selon l'une des revendications précédentes, dans lequel les résidus carbonés produits à l'étape de pyrolyse sont soumis à une fissuration thermique à l'étape d'oxydation partielle, en fournissant simultanément une quantité de vapeur à l'étape d'oxydation partielle.

9. Procédé selon l'une des revendications précédentes, dans lequel les résidus carbonés après l'étape de réduction sont soumis à un reformage catalytique en présence de vapeur.
